(19)

Europäisches
Patentamt
European
Patent Office
Office européen
des brevets

(11)     EP 2 572 233 B1

(12)               **EUROPEAN PATENT SPECIFICATION**

(45) Date of publication and mention
of the grant of the patent:
**19.12.2018   Bulletin 2018/51**

(21) Application number: **11723703.2**

(22) Date of filing: **13.05.2011**

(51) Int Cl.:
*G02B 27/22* (2018.01)          *H04N 13/305* (2018.01)
*H04N 13/368* (2018.01)          *H04N 13/354* (2018.01)

(86) International application number:
**PCT/IB2011/052107**

(87) International publication number:
**WO 2011/145031 (24.11.2011 Gazette 2011/47)**

(54) **MULTI-VIEW DISPLAY DEVICE**

ANZEIGEVORRICHTUNG MIT MEHREREN ANSICHTEN

DISPOSITIF D'AFFICHAGE MULTIVUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2010   EP 10166993
21.05.2010   EP 10163600**

(43) Date of publication of application:
**27.03.2013   Bulletin 2013/13**

(73) Proprietor: **Koninklijke Philips N.V.
5656 AE Eindhoven (NL)**

(72) Inventors:
• **PIJLMAN, Fetze
NL-5656 AE Eindhoven (NL)**
• **WILLEMSEN, Oscar Hendrikus
NL-5656 AE Eindhoven (NL)**

• **DESMET, Lieven Raf Roger
NL-5656 AE Eindhoven (NL)**
• **SLUIJTER, Maarten
NL-5656 AE Eindhoven (NL)**
• **DE ZWART, Siebe Tjerk
NL-5656 AE Eindhoven (NL)**
• **KRIJN, Marcellinus Petrus Carolus Michael
NL-5656 AE Eindhoven (NL)**

(74) Representative: **Kroeze, Johannes Antonius
Philips Intellectual Property & Standards
High Tech Campus 5
5656 AE Eindhoven (NL)**

(56) References cited:
**EP-A2- 0 570 179          WO-A1-98/21620
US-A1- 2006 238 863**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to a multi-view display device for providing multiple views within a field of view of the display device of the type that comprises a display panel having pixels for producing a display and an imaging arrangement for directing multiple views to different spatial positions within the field of view of the display device.

BACKGROUND OF THE INVENTION

A first example of a multi-view display device includes an imaging arrangement in the form of a parallax barrier that has slits that are sized and positioned in relation to the underlying array of columns and rows of pixels of the display panel. In a two-view design, the viewer is able to perceive a 3D image if his/her head is at a fixed position. The parallax barrier is positioned in front of the display panel and is designed so that light from the odd and even pixel columns is directed towards the left and right eye of the viewer, respectively.

A drawback of this type of two-view display design is that the viewer has to be at a fixed position, and can only move approximately 3 cm to the left or right. In a more preferred embodiment there are not two sub-pixel columns beneath each slit, but several. In this way, the viewer is allowed to move to the left and right and perceives a stereo image in his/her eyes all the time.

The parallax barrier arrangement is simple to produce but is not light efficient, especially when the number of views increases. A preferred alternative is therefore to use a lens arrangement as the imaging arrangement. For example, an array of elongate lenticular elements can be provided extending parallel to one another and overlying the display panel pixel array, and the display pixels are observed through these lenticular elements.

The lenticular elements are provided as a sheet of elements, each of which comprises an elongate semi-cylindrical lens element with the elongate axis perpendicular to the curvature of the lens element. The lenticular elements extend along their elongate axis in the column direction of the display panel, with each lenticular element overlying a respective group of two or more adjacent columns of display pixels.

In an arrangement in which, for example, each lenticule is associated with two columns of display pixels, the display pixels in each column provide a vertical slice of a respective two dimensional sub-image. The lenticular sheet directs these two slices and corresponding slices from the display pixel columns associated with the other lenticules, to the left and right eyes of a user positioned in front of the sheet, so that the user observes a single stereoscopic image. The sheet of lenticular elements thus provides a light output directing function.

In other arrangements, each lenticule is associated with a group of four or more adjacent display pixels in the row direction. Corresponding columns of display pixels in each group are arranged appropriately to provide a vertical slice from a respective two dimensional sub-image. As a user's head is moved from left to right, a series of successive, different, stereoscopic views are perceived creating, for example, a look-around impression.

The above described device provides an effective three dimensional display. However, it will be appreciated that, in order to provide stereoscopic views, there is a necessary sacrifice in the horizontal resolution of the device. This sacrifice in resolution increases with the number of views generated. Thus, a major drawback of using a high number of views is that the image resolution per view is reduced. The total number of available pixels has to be distributed among the views. In the case of an N-view 3D display with vertical lenticular lenses, i.e. vertical with respect to viewer orientation, the perceived resolution of each view along the horizontal direction will be reduced by a factor of N relative to the 2D pixel resolution. In the vertical direction the resolution will remain the same as the 2D pixel resolution. The use of a barrier or lenticular that is slanted can reduce this disparity between resolution in the horizontal and vertical direction in the autostereoscopic mode. In that case, the resolution loss can be distributed evenly between the horizontal and vertical directions.

Increasing the number of views thus improves the 3D impression but reduces the 3D image resolution as perceived by the viewer. The individual views are in each so-called viewing cones, and these viewing cones typically repeat across the field of view.

The viewing experience is hampered by the fact that the viewers are not entirely free in choosing their location from which to view a 3D display device as at the boundaries between viewing cones the 3D effect is absent and ghost images appear. This invention relates to this problem.

EP0570179 A2 describes a multi-view display providing a temporal sequence of different pairs of views by sequentially activating selected light sources.

SUMMARY OF THE INVENTION

It is an object of the invention to provide an improved multi-view display device. In particular the device enables reduction of cone boundaries.

This object is achieved with the invention as defined in the independent claims. The dependent claims provide advantageous embodiments.

The multi-view display device as defined in claim 1 provides a display device that enables an output with controlled illumination direction of the pixels so that view repetitions can be avoided. Thus, the output of the display device in its field of view can be a single cone having multiple views. This forms a partial display output, either because it is only directed to a narrow field of view, or because multiple partial output are provided time-sequentially to build up the resolution. In the case where the partial display output is a partial output region, the location from which the cone of views can be viewed depends on the relationship between the light sources of the backlight which are activated and the display panel.

An array of lenses is arranged in front of the display panel and the light of each pixel illuminates substantially one lens. This avoids view repetitions and therefore cone boundaries. The array of lenses can image the pixel plane of the display panel to substantially infinity. The array of lenses can be switchable, so that the display is switchable between 2D and 3D modes of operation and/or multiple modes of 3D operation, wherein the multiple modes are distinguished by their number of views.

During operation of the device, all pixels are illuminated with a predetermined spread of light around one common direction such that during one illumination operation the views are generated in a partial field of view of the display device.

Thus, a single cone with multiple views is provided in a desired direction. The position of the selected output region can be selected by adjusting the positions of the light sources relative to the display panel. A larger viewing range can be built up in time-sequential manner.

This device further comprises a headtracking system, and the output direction is selected based on the input received from the headtracking system.

The light sources can be independently controllable, and the display device output comprises a display output resulting from actuation of a sub-set of the light sources, wherein the output from each actuated light source illuminates a respective region of the display panel, with no operated region of the display panel illuminated by more than one light source.

The control of the light source arrangement can then determine in which directions views are provided. A larger viewing range can again be built up in time-sequential manner.

A spacer can be provided between the light sources and the display panel arranged such that it limits said respective region for each light source of the backlight.

The backlight can further comprise a lens associated with each light source for providing a collimated directional output. This directional output then dictates the output region from which the display can be viewed.

A switchable diffuser can be provided for converting the output of the backlight from a directional output to a diffuse output. In this way, the device can be used to provide a single cone output in a desired direction, or else a diffuse output results in a more conventional multiple cone arrangement. This may be more suitable if there are many viewers across the full field of view.

The backlight can comprise a transparent slab, wherein the slab is shaped with a cross section in the shape of a rectangle with cut-outs, wherein the cut-outs are positioned in areas between the light sources which are beyond the spread of light from the light sources. This design reduces the weight of the backlight by removing material that does not contribute to the optical performance of the backlight.

If the distance between the pixel plane and the array of lenses, converted into an effective optical distance through the material of the lens, is defined as d1*, the distance between light source and pixel plane, converted into an effective optical distance through the material of the lens, is defined as d2* then d2*=kd1* where k is an integer. This is of particular interest when one light source is used to project a region of the display to multiple lenses, and ensures that a repeatable pattern of pixels is mapped to each lens.

In one arrangement, the light sources extend from top to bottom of the display, aligned with the long axes of the lenses, and each light source is segmented with independently drivable segments. This enables the illumination provided by the backlight to be matched better to a row by row addressing of the display, to ensure that pixels are illuminated when their drive level has stabilized and illumination can be halted before cross talk arises.

In all examples, the display panel can comprise an array of Liquid Crystal (LC) display pixels and the light sources can comprise Light Emitting Diode (LED) dots or lines.

The invention also provides a method of operating the multi-view display device of the invention.

BRIEF DESCRIPTION OF THE DRAWINGS

Embodiments of the invention will now be described, purely by way of example, with reference to the accompanying drawings, in which:

Fig. 1 is a schematic perspective view of a known autostereoscopic display device;
Fig. 2 shows how a lenticular array provides different views to different spatial locations;
Fig. 3 shows a cross-section of the layout of a multi-view auto-stereoscopic display;
Fig. 4 is a close-up of Fig. 3;
Fig. 5 shows a 9-view system in which the views produced in each of the sets of cones are equal;
Fig. 6 shows a first example of display device of the invention;
Fig. 7 shows a modification to the design of Fig. 6;
Fig. 8 shows a second example of display device of the invention;
Fig. 9 shows a modification to the design of Fig. 8;
Fig. 10 shows a further possible modification to the design of Fig. 8;
Fig. 11 shows a third example of display device of the invention;
Fig. 12 shows a fourth example of display device of the invention;
Fig. 13 shows the maximum weight reduction possible using the principles explained with reference to Fig. 12;
Fig. 14 shows a fifth example of display device of the invention;
Fig. 15 shows how views are mapped to pixels in a known multiple cone display;
Fig. 16 shows a display device of the invention in which one light source is used to illuminate multiple lenses, and is used to explain the required view mapping;
Fig. 17 shows the view mapping of the invention for the arrangement of Fig. 16;
Fig. 18 shows a first example of segmented backlight which can be used in the device of the invention;
Fig. 19 shows the backlight of Fig. 18 with one illuminated segment;
Fig. 20 shows a timing diagram for the operation of the backlight of Fig. 18; and
Fig. 21 shows a second example of segmented backlight which can be used in the device of the invention.

## DETAILED DESCRIPTION OF THE EMBODIMENTS

The invention provides a multi-view display device in which the backlight comprises an arrangement of light sources, wherein each light source, when turned on, directs light to an associated region of the display panel. The light sources are arranged in lines. These lines may be continuous, but they may also be segmented (forming a dotted or dashed line). The lines of light sources can be staggered to match staggered lenses.

A spread of light from the light source is over a predetermined angle thereby forming an associated output region within the field of view of the display panel from which that region of the display panel illuminated by the light source can be viewed. A display controller adaptively controls the arrangement of light sources such that a partial display output is provided comprising a set of at least three 2D views with no repetition of individual 2D views. A single cone output can be generated by sequentially providing different partial display outputs. Alternatively, a partial display output only can be provided in a selected direction, if the location of the viewer is known.

The problems addressed by the invention will first be described in more detail before an explanation of the invention is provided.

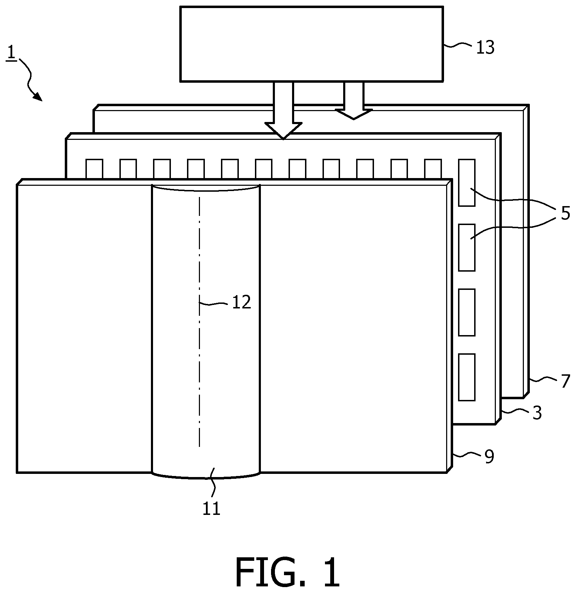

Fig. 1 is a schematic perspective view of a known direct view autostereoscopic display device 1. The known device 1 comprises a liquid crystal display panel 3 of the active matrix type that acts as a spatial light modulator to produce the display.

The display panel 3 has an orthogonal array of rows and columns of display pixels 5. For the sake of clarity, only a small number of display pixels 5 are shown in the Fig.. In practice, the display panel 3 might comprise about one thousand rows and several thousand columns of display pixels 5. In a black and white display panel the term pixel is to be construed as meaning a smallest unit for representing a part of an image. In a colour display a pixel represents a sub-pixel of a full colour pixel. The full colour pixel, according to general terminology comprises all sub-pixels necessary for creating all colours of a smallest image part displayed. Thus, e.g. a full colour pixel may have red (R) green (G) and blue (B) sub-pixels possibly augmented with a white sub-pixel or with one or more other elementary coloured sub-pixels. The structure of the liquid crystal display panel 3 is entirely conventional. In particular, the panel 3 comprises a pair of spaced transparent glass substrates, between which an aligned twisted nematic or other liquid crystal material is provided. The substrates carry patterns of transparent indium tin oxide (ITO) electrodes on their facing surfaces. Polarising layers are also provided on the outer surfaces of the substrates.

Each display pixel 5 comprises opposing electrodes on the substrates, with the intervening liquid crystal material therebetween. The shape and layout of the display pixels 5 are determined by the shape and layout of the electrodes. The display pixels 5 are regularly spaced from one another by gaps.

Each display pixel 5 is associated with a switching element, such as a thin film transistor (TFT) or thin film diode (TFD). The display pixels are operated to produce the display by providing addressing signals to the switching elements, and suitable addressing schemes will be known to those skilled in the art.

The display panel 3 is illuminated by a light source 7 comprising, in this case, a planar backlight extending over the area of the display pixel array. Light from the light source 7 is directed through the display panel 3, with the individual display pixels 5 being driven to modulate the light and produce the display.

The display device 1 also comprises a lenticular sheet 9, arranged over the display side of the display panel 3, which performs a light directing function and there with a view forming function. The lenticular sheet 9 comprises a row of lenticular elements 11 extending parallel to one another, of which only one is shown with exaggerated dimensions for the sake of clarity.

The lenticular elements 11 are in the form of convex cylindrical lenses each having an elongate axis 12 extending perpendicular to the cylindrical curvature of the element, and each element acts as a light output directing means to provide different images, or views, from the display panel 3 to the eyes of a user positioned in front of the display device 1.

The display device has a controller 13 which controls the backlight and the display panel.

The autostereoscopic display device 1 shown in Fig. 1 is capable of providing several different perspective views in different directions, i.e. it is able to direct the pixel output to different spatial positions within the field of view of the display device. In particular, each lenticular element 11 overlies a small group of display pixels 5 in each row, where, in the current example, a row extends perpendicular to the elongate axis of the lenticular element 11. The lenticular element 11 projects the output of each display pixel 5 of a group in a different direction, so as to form the several different views. As the user's head moves from left to right, his/her eyes will receive different ones of the several views, in turn.

The skilled person will appreciate that a light polarising means must be used in conjunction with the above described array, since the liquid crystal material is birefringent, with the refractive index switching only applying to light of a particular polarisation. The light polarising means may be provided as part of the display panel or the imaging arrangement of the device.

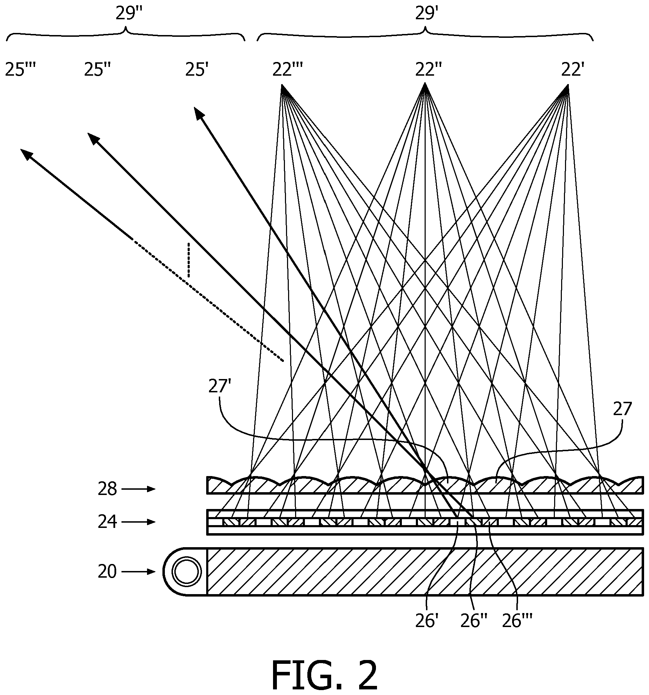

Fig. 2 shows the principle of operation of a lenticular type imaging arrangement as described above in more detail and shows the backlight 20, the display device 24, the liquid crystal display panel and the lenticular array 28 in cross section. Fig. 2 shows how the lenticular 27 of the lenticular arrangement 28 directs the outputs of the pixels 26', 26" and 26"' of a group of pixels to the respective three different spatial locations 22', 22" and 22"' in front of the display device. The different locations 22', 22" and 22"' are part of three different views.

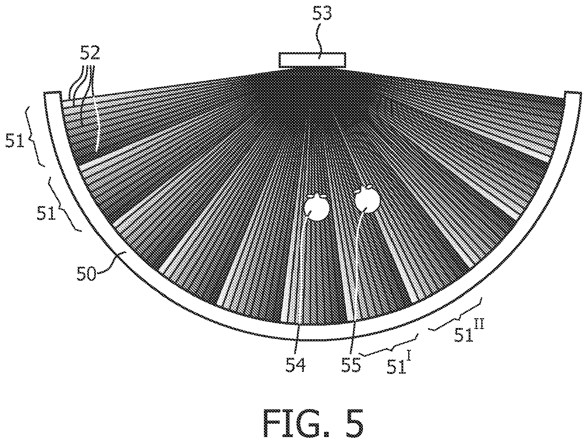

In a similar manner, the same output of display pixels 26', 26" and 26"' is directed into the respective three other different spatial locations 25', 25" and 25"' by the lenticular 27' of the arrangement 28. While the three spatial positions 22' to 22"' define a first viewing zone or cone 29', the three spatial positions 25' to 25"' define a second viewing cone 29". It will be appreciated that more of such cones exist (not shown) depending on the number of lenticular lenses of the array that can direct the output of a group of pixels such as formed by the pixels 26' to 26"'. The cones fill the entire field of view of the display device, as also explained in relation to Fig. 5.

The above view directing principle leads to view repetition occurring upon going from one viewing cone to another as within every cone the same pixel output is displayed in a particular view. Thus, in the example of Fig 2, spatial positions 22" and 25" provide the same view, but in different viewing cones 29' and 29" respectively. In other words, a particular view shows the same content in all viewing cones. The current invention is concerned with this view repetition.

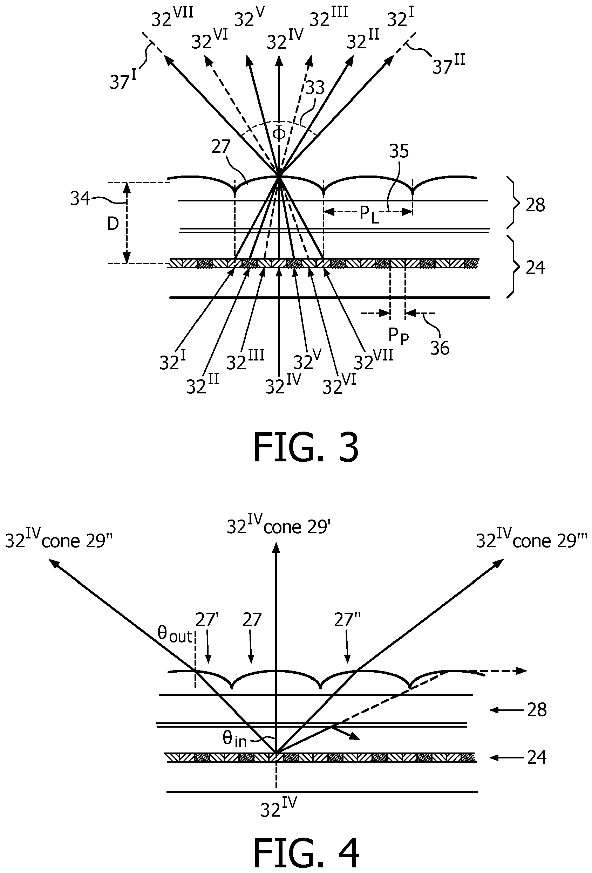

Fig. 3 shows a more detailed cross-section of the layout of a multi-view auto-stereoscopic display as described in relation to Figs. 1 and 2. Each pixel $31^I$ to $31^{VII}$ underneath a certain lenticular lens (e.g. 27) will contribute to a specific view of the views $32^I$ to $32^{VI}$. All these pixels underneath this lens will together contribute to a cone of views the boundaries of which are indicated with lines $37^I$ and $37^{II}$. The width of this cone expressed for example in the viewing cone angle (Φ) 33 is determined by the combination of several parameters such as the distance (D) 34 from the pixel plane to the plane of the lenticular lenses and the lens pitch ($P_L$) 35 as will be evident from general optical principles.

Fig. 4, showing the same cross section as Fig. 3, shows that the light emitted (or modulated) by a pixel $31^{IV}$ of the display panel 24 is collected by the lenticular lens 27 closest to the pixel in order to be directed towards view $32^{IV}$ of viewing cone 29' but also that it is collected by the neighbouring lenses 27' and 27" of the lenticular arrangement to become directed to the same view $32^{IV}$ but of different viewing cones 29" and 29"'. This is the origin of the occurrence of repeated cones of the same views.

The corresponding views produced in each of the cones are equal. This effect is schematically shown in Fig. 5 for a 9-view system (i.e. 9 views in each cone). Here the entire field of view 50 of a display device 53 is divided into multiple viewing cones 51 (11 in total of which only four are indicated by the reference numeral 51) each one of the viewing cones having the same multiple views 52 (in this case 9 which are only indicated for one of the viewing cones).

For an acceptable compromise between 3D effect and resolution penalty, the total number of views is limited to typically 9 or 15. Each of these views has an angular width of typically 1°-2°. Now, viewer 54 is placed within one viewing cone and receives the views in his eyes according to the proper parallax information within the views as long as he stays within the one viewing cone. Hence he is able to observe a 3D image without distortion. The same 3D perception is thus available for every viewer that is within one of the viewing cones 51. However, the views and the viewing cones have the property that they are periodic along the field of view. If the user walks around the display he will at some point cross at least one of the boundaries between adjacent viewing cones, as for example indicated for the viewer 55 which is at the boundary of the viewing cones $51^I$ and $51^{II}$. In such regions the images in both eyes will not properly match. Thus, e.g. in this position of viewer 55 and the current case of the 9-view system the left eye will receive e.g. the 9th image of viewing cone 51I and the right eye will receive e.g. the 1st image of viewing cone 51II. These views however have the wrong parallax information since the left and right images are reversed, which means that the image is pseudoscopic. Furthermore, and more severe, there is a very large disparity between the images, i.e. the views are 8 views distant from each other. This is referred to as "super pseudoscopic" viewing. As the viewer moves across the cone boundaries discontinuous jumps are observed.

The invention provides a controllable light source within the display device to control the direction in which a viewing cone is projected to the user. This can be used either to steer the viewing cone so that a viewer in a known position is near the centre of the viewing cone, or to provide a display output made up of multiple time-sequential viewing cones, with no image transitions at the cone boundaries.

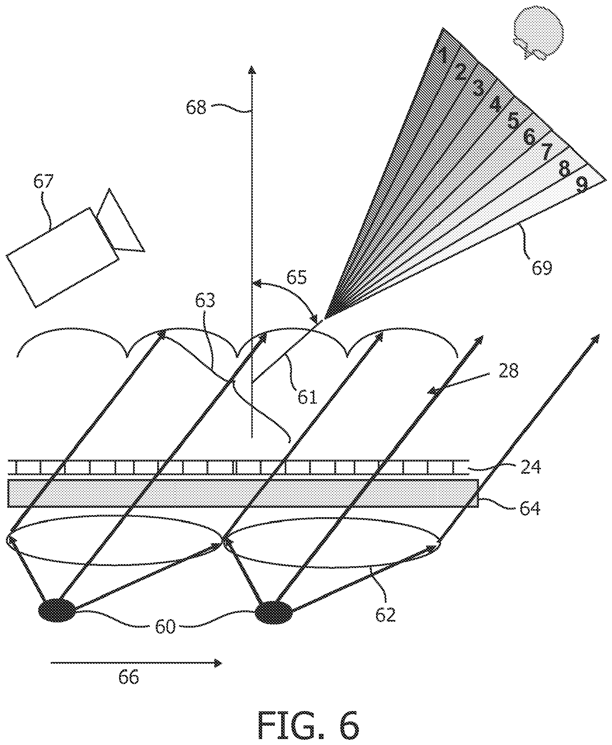

Fig. 6 shows a first display device according to the invention, in which one or more viewing cones are projected in one or more different desired directions. Again there are present a lenticular arrangement 28 and a spatial light modulator such as a liquid crystal display panel 24. In the present example these elements are the same as the corresponding ones described in relation to Figs 1 to 5 above.

A set of light sources 60, for example light emitting diode (LED) strips, is positioned in the backlight with lenses 62 in front of them. The lenses 62 may be one dimensional so that their output is a set of collimated columns of light 63. In the present example the columns of light extend perpendicular to plane of drawing of Fig. 6. If the lenses are two dimensional, i.e. have a lensing function along two crossing axes, then a diffusing action needs to take place later in the system, e.g. spherical lenses on the spatial light modulator in order to mitigate the lensing action in one of the axes directions so as to again have a set of columns of collimated light.

A switchable diffuser 64 is provided at the output side of the backlight arrangement on top of the collimating lenses 62. This is an optional feature, which enables the device to be switched between the single cone mode of the invention and a conventional multiple cone mode.

By moving the light sources 60 along direction 66 with respect to the lenses 62, or switching on and off different ones or sets of light sources 60 to for example mimic such movement, the direction of collimation with respect to the normal 68 of the display device can be adjusted. This variation of collimation direction may be implemented in discrete steps or the adjustment can be carried out in a continuous manner.

A head tracking device is provided for determining the number and location of the viewers. This is well a known apparatus, and a camera 67 is shown in Fig. 6 to represent schematically the headtracking system. If a single viewer is present, then the switchable diffuser 64 is switched to the transparent state and the backlight is adjusted such that the viewer receives a set of views. This provides the single cone arrangement of the invention. The adjustment of the backlight arrangement basically comprises putting the light sources 60 in the right position with respect to the lens 62. The adjustment is then such that the viewing cone is directed such that the viewer is not a boundary of the viewing cone, but completely within the directed viewing cone. This adjustment can be done by shifting the light sources, or by switching certain light sources on or off. The latter may be done using a segmented backlight and providing the proper electrical time sequential driving for example.

Alternatively or additionally, the lenses may be moved, for example using Graded Refractive INdex Lens (GRIN) technology with polarized light sources. Such moving or lateral displacement of lenses is for example described in international patent applications with publication number: WO2007/072330. This technology enables a shift of lens positions, and can be applied for the collimation lenses of the current invention. Other ways of implementing such relative position shift of collimation lenses and backlight sources will be apparent and may be used.

In the example shown in Fig. 6, the viewing cone 69 having views 1 to 9 is directed in the direction 61 making an angle 65 with the normal 68 as shown for the viewer shown. The direction 61 does not need the viewer to be bisecting the viewing cone angle. It suffices that the direction is such that the viewer is completely within the viewing cone. Thus, his right eye must at least be provided with view 1 or his left eye must be at least provided with the view 9 of the directed viewing cone.

For a single viewer, these viewing cone direction adjustments may be on the length scale of seconds. The viewer-tracking simply needs to be able to follow the viewer if is he/she is moving.

The viewer-tracker may be enabled by one or more cameras of a mobile phone (cell phone) or other handheld device. In general, a mobile phone or handheld device is observed by only one viewer so that the viewer-tracker can advantageously provide the one viewer with an optimum set of views at all time. Since for one viewer cone adjustment does not require fast response, complex driver and computation devices may be advantageously avoided in the handheld device in view of space and limited power provision.

If more viewers are present, then the system determines whether each viewer can receive an independent non-overlapping set of views that are generated by the directional backlight arrangement. This assessment is based on the combination of the positions of the viewers, and the known angular width of the viewing cones. If all viewers can be provided with viewing cones which do not overlap, then the backlight is driving time-sequentially as is the spatial light modulator. Thus, different viewing cones are generated in the desired directions with respect to the normal 68 of the display device in time-sequential manner. The different viewing cones are then generated within different sub-cycles (sub-frames) of a driving cycle (frame) that provides a certain image. In other words, the display frame (time) for providing one frame of a video or one image may be divided into sub-frames (times). The different viewing cones now display the view content such that each of the respective viewers does not experience a cone transition. Thus, the views for each viewer are provided such that each viewer is located within a viewing cone and not on viewing cone transitions. In this way viewing cone transitions may be reduced or avoided. Some viewers may share a viewing cone, or indeed all viewers, if close together, may be able to be served by a single viewing cone.

There is a minimum frame rate that is required for the viewer, typically 50 Hz. This means that if 2 viewers are present requiring separate viewing cones, the time-sequential system needs to run at 100 Hz and if 3 persons are present 150 Hz. There will thus be a physical limit to what the system is able to do which limit is dependent on the frame rate that can be achieved with a certain display device hardware implementation including for example the spatial light modulator. If the spatial light modulator is based on liquid crystal operation, the switching speed of such liquid crystal cells will be an important limiting factor in this respect.

If more viewers are present than it is possible to sustain for the time-sequential system in view of the limited frame rate, then the diffuser 64 can be switched on to reduce or remove the collimation of light. The system then resorts to the standard multi-view performance having repeated viewing cones as explained with respect to Figs. 1 to 5. It will thus be understood that a display according to the invention need not have the diffuser in order to be enable to provide the directed viewing cone.

The backlight may be directed such that the center of a set of views (i.e. a viewing cone) is most close to the viewer. In this case, the viewer can quickly move his head over a finite distance without losing contact with the set of views during which no additional viewing cone direction adjustment would be necessary.

In another arrangement not covered by the present invention wherein the display device is fast enough for its optical design (optical cone-size defined by glass thickness and lens pitch), then the display device could also not use viewer-tracking but just run in a fixed time-sequential mode. In this case, all views across the full field of view of the display device can be different. The complete field of view is filled with multiple viewing cones, but all views of the viewing cones display different image information. Thus, a viewer located at a viewing cone boundary may see one image with one eye in one sub-frame and see the image for the other eye in a time-adjacent sub-frame so that (super)pseudoscopic imaging as described above is avoided at the viewing cone boundaries. This requires the image data to encode many more views, and it may effectively define a single viewing cone display, but with the output built up over sub-frames.

It will be apparent to the person skilled in the art that there may be a situation where specific cone boundaries are resolved in this way while others remain in place. This effectively enlarges a viewing cone in certain directions.

The lenticular in front of the display reduces the resolution as is well known. For some applications, it is necessary that the display is able to show high resolution 2D images, e.g. when text information is shown, without any resolution loss. In that case the light directing arrangement of the display device may be one having a light directing function in one mode and a transparent non light directing function in another mode. Such light directing arrangements that can switch can be implemented in multiple ways such as for example disclosed in international patent applications published under WO1998/021620, WO2008/126049, WO2004/070451, WO2004/070467, WO2005/006774, WO2003/034748 or WO2003/071335. The person skilled in the art will be able to implement each and every one of the disclosed arrangements without difficulty based on the respective disclosures. Making the lenticular switchable restores the resolution to the native pixel resolution of the display panel of the display device, but in the case of a directional backlight without time sequential scanning, the 2D image cannot be seen from all angles as the backlight arrangement is also directional due to its light collimation. This may be acceptable for a single user application, but in some applications, e.g. with multiple users, wide angle 2D images are desired. The switchable diffuser 64 can then be switched to the diffusing state to convert the backlight output into a standard diffuse light output. In this mode, the display device thus operates as a regular 2D display device. The display device of the invention has a controller similar to the controller 13 of the prior art in Fig. 1, which controls the backlight and the display panel.

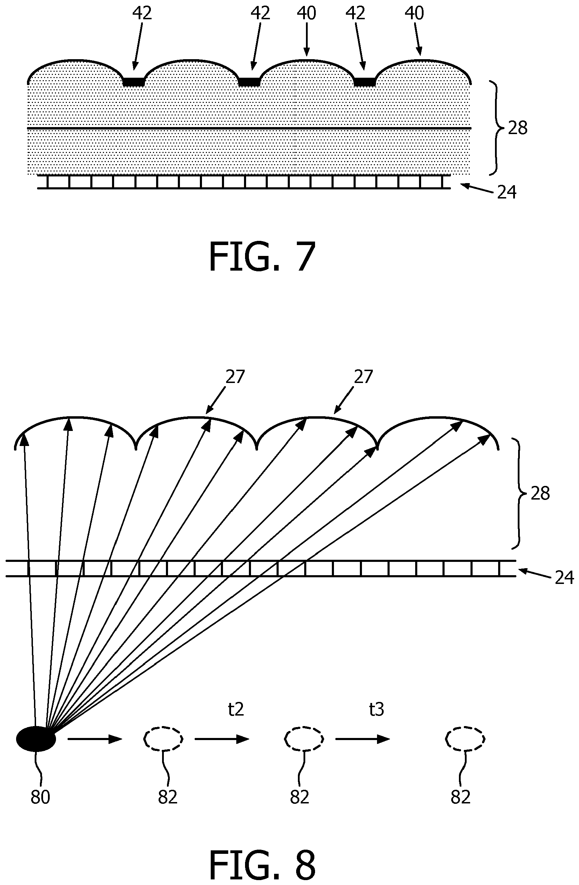

The display device according to the invention in the multi-view mode preferably requires backlight arrangements which provide well-collimated light beams. If the light is not sufficiently collimated then light modulated through a certain (sub)-pixel will contribute to more than one lens of the light directing arrangement, giving rise to repeated views in neighbouring viewing cones. Making a backlight arrangement provide well collimated light generally requires a complex design which can be expensive or inefficient. A solution to this problem is to use a backlight providing slightly less well-collimated light and to put a light barrier array 42 between the lenses 40 of the light directing arrangement 28 as shown in Fig. 7.

As mentioned above, the backlight for providing collimated light may be formed using Light Emitting Diodes (LED)s. Compound parabolic collectors (CPCs) can also be used, that are positioned with different angles pointing towards the LC-panel.

In the example above, the direction of the backlight output is controlled so that a limited viewing cone output is provided for the display device, in which all views may display different content. The limited viewing cone may be all that is needed as a field of view of the display device if the viewing cone can be projected towards the known position of the viewer. Alternatively, a larger field of view can be built up in time-sequential manner as explained above.

An alternative way to use a controllable backlight is to allow the backlight output to cover the normal range of angles (i.e. until there is total internal reflection within the structure see e.g. Fig. 4 indicating internal reflection) but to illuminate only backlight portions so that each pixel is only illuminated towards one lens of the light directing arrangement. This approach is shown in Fig. 8, in which a display is shown having a light modulator 24 (in this case a liquid crystal panel) in combination with a light directing arrangement 28 having lenses 27 as described hereinbefore. Only one backlight portion 80 is illuminating the light modulator 24 at a certain time t to provide the light directing elements with light modulator output. The other backlight portions 82 are illuminated in time sequential manner one after the other.

Thus, the backlight comprises a set of line sources 80 to 82 that can be individually switched on or off. Each video frame is split up into several subframes. In each subframe, the content is written to the spatial light modulator panel and one of the line sources in the backlight is switched on. The difference between the subframes is that different lines sources are switched on and the LC panel is addressed with different content. This different content is such that the resolution of an image is built up sequentially. For example, only one pixel associated with the illuminated light source contributes to the image being projected normally to the display. Each time a different set of light sources is used, a different set of pixels contributes to that view, so that the image resolution is built up in stages.

By way of example, the spatial light modulator full pixel pitch may be of the order of 250 microns. The lenticular may be a 15 view arrangement with slant $\tan\alpha$ of 1/6, but other slant angles may be used to advantage. The line source width may be approximately 1 millimetre and the thickness of the module around 6 centimetres.

The backlight switches the line sources on and off such that light through a pixel substantially illuminates a single lens. Combined with a fast spatial light modulator display panel which changes the pixel values for each light source illumination event, a single viewing cone experience can be achieved without viewing cone transitions.

The number of light sources needed in the display device operating with the above approach can be determined by testing the device such as to display a full white image with a minimum number of light sources. The lenticular lens array has a diffusing effect, and the diffuser in the backlight that is normally present can be omitted if the line sources are sufficiently close together.

Requiring light through a pixel substantially illuminating a single lens gives a relation between the distance of the light sources to the display, the width of the light sources, and the pitch of the lenses.

If the desired configuration means than some pixels may still illuminate several lenses, then these pixels may be switched off for removing artefacts. Thus, some pixels are not "operated", and no "operated" region of the display panel is illuminated by more than one light source. A region which is not operated is set to an absorbing (i.e. black) state.

A conventional backlight includes a diffuser to provide a uniform output. For this design, it is preferred that the back diffuser is either replaced by a light absorbing layer or that the diffuser is put very close to the light source. This is because a conventional diffuser will prevent the illumination of a pixel from a single range of directions as required in this application. Thus, since the light through a pixel should not have too much spread, it is preferred not to use a reflective polarizer in the backlight.

At present it is common to slant the lenticular over the display for improving the horizontal 3D resolution. The line light sources have their long axis extending in the line direction of the light sources and the light sources can be slanted in the same way as the lenticules so that there is a better mapping between lenticular elongate axis and light source line long axis. This may reduce optical light artefacts.

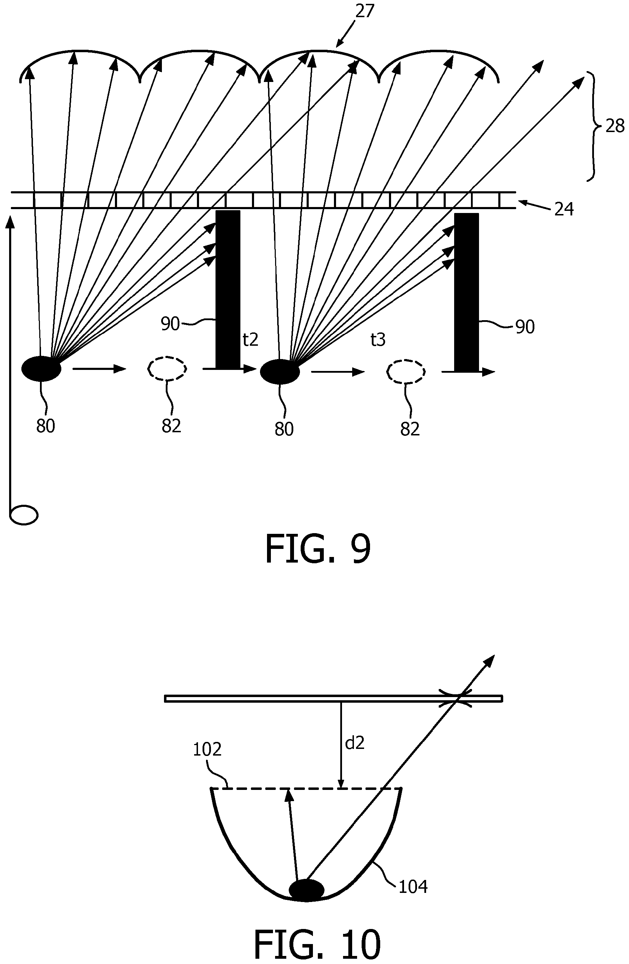

In Fig. 8, the light of a single light source (e.g. 80) basically spreads in all directions. In order to have light from a pixel of the panel 24 projected to a single lens (e.g. 27), one light source is switched on at a time. Since the spacing of illuminated light lines is such that light at a subpixel is from one light line only, the resolution generated in one subframe is very low. For a good resolution, many light lines should be provided between the spacing of the light lines that are to be operated simultaneously, resulting in many sub frames. This requires high refresh/frame rates for the spatial light modulator panel 24. In order to reduce the frame rate, absorbing walls can be provided in the backlight to define segments. Each segment can then be driven simultaneously, and the number of subframes corresponds to the number of backlight light sources in each segment. This arrangement is shown in Fig. 9, which has identical units as described in relation to Fig. 8 and in which the absorbing walls are shown as 90. In the arrangement shown, there are two backlight light sources per segment, and therefore only two subframes.

The same effect can also be achieved by putting polarization sensitive collimators around the light sources. At the exit of the collimator a reflective polarizer can be provided such that the LC-panel receives polarized light. This enhances the efficiency. It is preferred that the collimators are also etendue conserving like CPCs. This arrangement is shown schematically in Fig. 10, in which the specular reflecting wall is shown as 100 and a non-diffusing reflective polarizer is shown as 102.

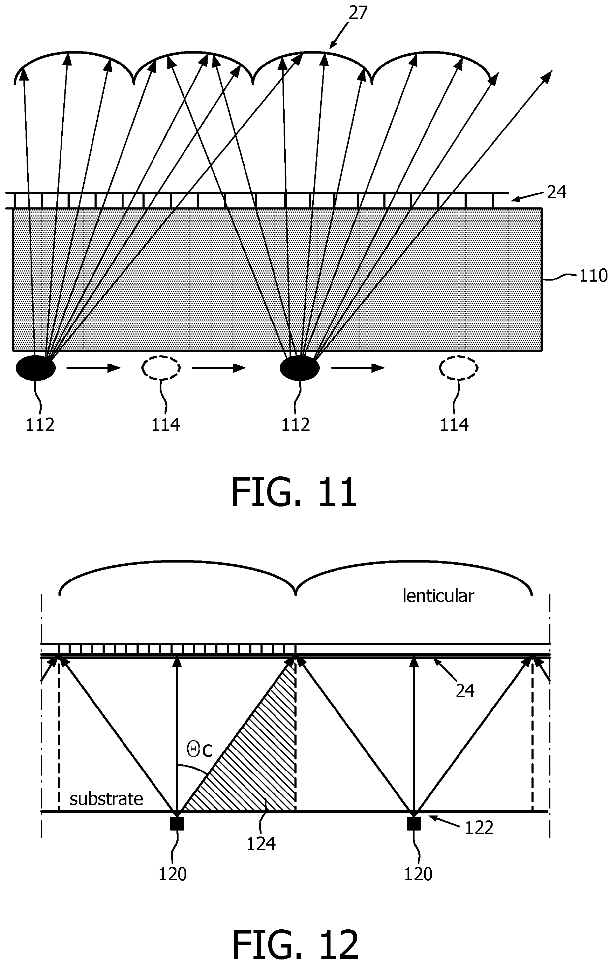

In the example of Fig. 9, absorbers are provided for limiting the spread of light and thereby reducing the frame rate. In the arrangement of Fig. 11, a spacer 110 provided between the light sources 112,114 and the LC-panel 24 is transparent and has a higher refractive index than the surrounding medium. The spacer functions as a light guide and is positioned directly on top of the light sources 112,114 and directly adjacent to the LC-panel 24 such that the spread of light is limited. This limitation is due to the refraction that occurs when light enters the light guide 110. This spacer comprises a backlight optical slab/substrate.

An air gap can be provided between the light sources and the spacer 110, again to limit the maximum light ray angles inside the substrate. This critical angle is defined as the inverse sine of the ratio of the refractive index of the air gap and the refractive index of the substrate. Since the light ray angle range is limited, fixed numbers of pixels in the LCD are illuminated. These illuminated pixels correspond to 3D views in a specific cylindrical lens in the overall 3D lenticular.

Fig. 12 shows an arrangement similar to Fig. 11, but in which the angular output of each backlight light source 120 covers a single lenticular lens. The backlight slab/substrate and the LCD panel are in optical contact and an air gap 122 is shown.

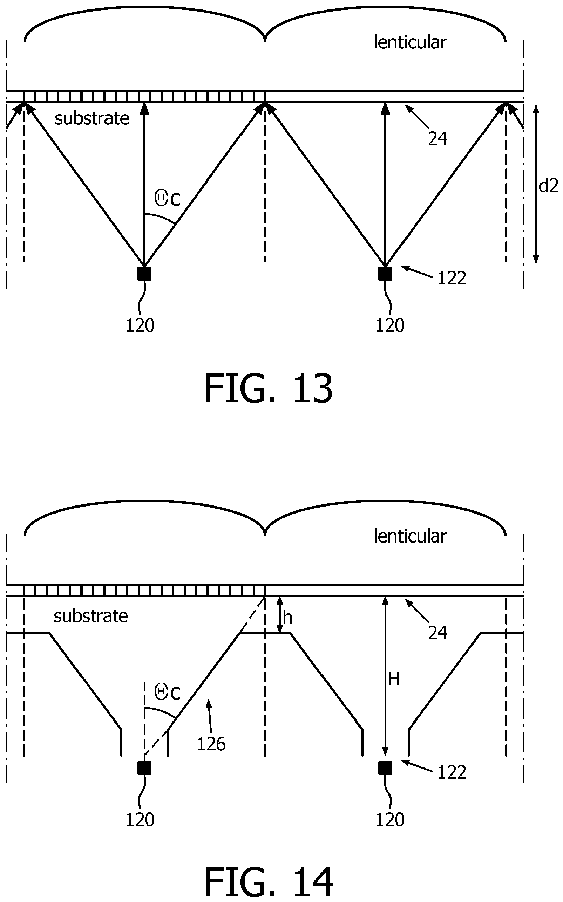

The hatched zone 124 (for example) in Fig. 12 does not contribute to the optical functionality of the directional backlight. Therefore substrate material can be removed from the hatched zone 124 and other equivalent regions. The reshaped directional backlight substrate/slab is shown in Fig. 13.

The maximum weight reduction of the substrate plate is related to the amount of zone surface that is eliminated from the plate. Theoretically a maximum of 50% can be obtained in weight reduction. In practice, as shown in Fig. 14, a minimum height h is necessary to maintain one single substrate plate with sufficient mechanical rigidity. In that case the maximum volume reduction is:

$$\left[1 - \left(\frac{\sqrt{2} \cdot h}{H}\right)^2\right] \cdot 50\%$$

Here h is the minimum height necessary for mechanical rigidity, H is the total substrate thickness. For example, for a 4 cm thick substrate with a minimum thickness h of 5mm, still a 48% weight reduction could be obtained.

In Fig. 14, the sidewalls 126 are made optically absorptive. The sidewalls may also have other optical functionality such as a CPC mirror curvature and having reflecting properties instead.

If multiple LED lines (e.g. N) per cylindrical lens are necessary for time sequential operation (as explained in examples above), the possible weight reduction in the substrate drops with a factor of 1/(2N).

In the examples above, the backlight is designed such that light through the pixels will essentially hit a single lens. To do this, light from the backlight originates from concentrated positions such as light lines. No pixel will be illuminated by more than one light line at a time.

To optimise the design, design rules for the optical system are required with the aim of reducing the computational power of the rendering chip, thus lowering the cost of the 3D set.

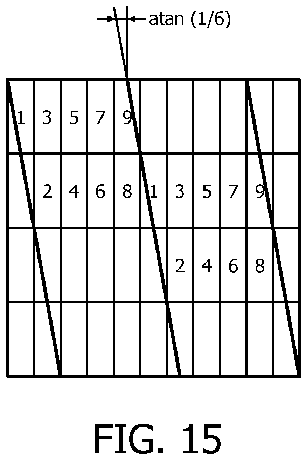

Fig. 15 is used to explain the difficulties faced when rendering the display, and shows how 9 views are rendered in a conventional device.

It is preferred that the lenticular is slanted at an angle of arctan(1/3) or arctan(1/6) to improve the pixel structure of the 3D display. Furthermore, the number of subpixels under a lens pitch have preferential values. One of the most common values is a lens pitch corresponding to 4.5 sub-pixels with a slant angle of arctan(1/6), giving rise to a 9 view 3D display. This configuration is shown in Fig. 15, and is used for explaining the design optimisation.

In a 9 view system with a normal backlight (i.e. a multiple cone implementation), the view number is determined by the position of the subpixel under the lens, or by the distance of the center of the subpixel to the lens axis. For a 9 view system this distance is [-2.5, -2, -1.5, -1, -0.5, 0, 0.5, 1, 1.5, 2]*p, in which p is the pitch of the subpixels. These correspond to the view numbers 1 to 9. If the light is going through a neighbouring lens, the view number will be the same because of view repetition.

For a single cone display as described above, the situation is different. Since there is no view repetition there are more addressable views. This relates specifically to the examples of the invention in which the light line is associated with multiple lenses. Thus, each pixel illuminates only one lens, but a group of lenses is illuminated by one light line (see for example Figs. 8,9 and 11).

A ray from a light line through a pixel can hit a lens that is not directly above the pixel, giving rise to light under a larger angle than the normal viewing cone (for example as shown in Fig. 9). Because of the optical construction there will at certain times be no light rays that can reach the lens above the pixel. Hence, this pixel can be rendered with image information for a large angle.

Depending on the spacing of the light lines and the pitch of the lenses and subpixels, the display will generate N views and these can be numbered ascending for ascending angles, starting with the most negative angle at view 0. If no special precautions are taken the correspondence between generated view and subpixel is not in a fixed repetitive pattern as is the case for a 9 view display.

The way to render the image depends on the geometry, and the view mapping can be found from ray tracing and be stored in a look-up table. This, however, is a quite expensive operation, since it requires a frame buffer and look-up actions for every pixel number. At the same time, it is questionable whether the picture quality and pixel structure is the same for all viewing angles.

It would therefore be desirable to provide the display with a more predictable structure, thus lowering computational power and cost.

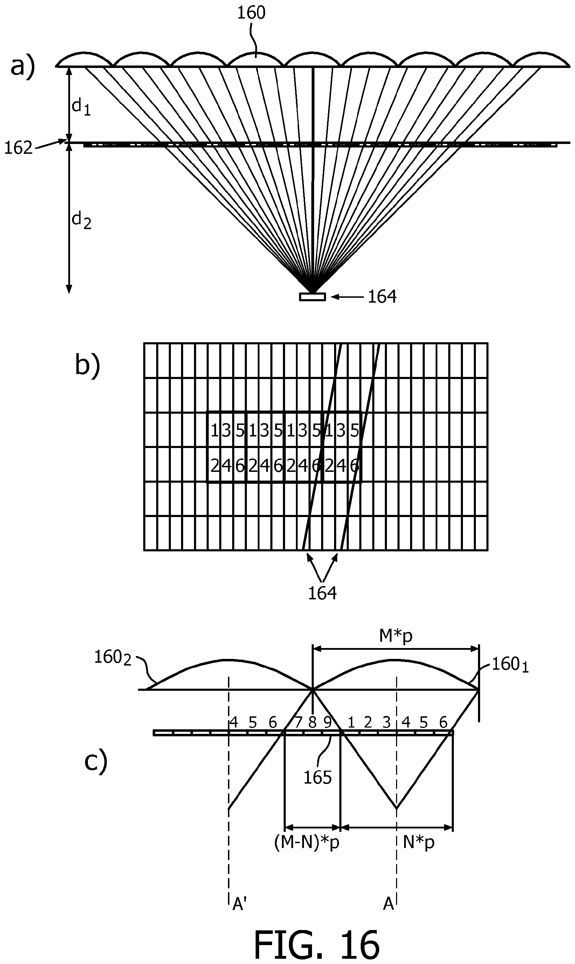

Fig. 16 shows an implementation in which a defined ratio is used of the distance between the lens 160 and the pixel plane 162 (di) and the distance between the pixel plane 162 and the light lines 164 ($d_2$).

Fig. 16a shows a cross-section through a single row and Fig. 16b shows the subsets of 6 subpixels that hit the same lens and thus behave in a similar way.

As a basic assumption, the pitch and slant of the lenticular are assumed such that there is an integer set of subpixels M under each lens of the lenticular that are positioned in the same way. If such a display lenticular combination was used with a traditional backlight, the 3D display would generate M views. The number M is defined as

$$M = n_{row} \times P_{lens} \div p \qquad \text{[Eq. 1]}$$

$P_{lens}$ is the pitch of the lenticular, p is the subpixel pitch and $n_{row}$ the number of rows after which the lens axis will be at the same position above a subpixel. For instance, for slant 1/6 $n_{row}$ will be 2.

For efficient rendering, blocks of pixels that behave in a similar way are needed. For the proposed optical geometry of Fig. 16, such blocks can consist of pixels from which the light is refracted in the same lenticule. The pixels in that block can be rendered with consecutive view numbers. In order to have them behaving in a similar way, the number of pixels hitting the same lens should be constant and integer. Straightforward geometrical calculations show that this condition is met if:

$$d_2M/(d_1+d_2) = N \text{ (N is an integer)} \qquad \text{[Eq. 2]}$$

This equation basically requires the image of the sub-pixels to be scaled (by the scaling factor $(d_1+d_2)/d_2$) such that an integer number of sub pixels fits into the lens width.

Blocks of subpixels are rendered with consecutive number. However, the neighbouring block is rendered similarly, but with an increased or decreased view number. This view number will be (M-N) higher or lower. This will continue until the last subpixel reached by light from the light line, after which the next light line takes over and rendering starts again at view number 0.

This is explained further with reference to Fig. 16c. This is based on the most simple example of a 9 view system without a slant. Thus, M=9 (9 sub pixels under each lens), and the distances d1 and d2 are such that 6 subpixels will illuminate the same lenticule.

In this case, the 6 subpixels which illuminate the lens $160_1$ are rendered consecutively 1,2,3,4,5,6 as shown. The subpixel 165 that is the left neighbour of subpixel 1, is still located directly under the same lens $160_1$ with lens axis A, but light from the line light source through that pixel $160_1$ will hit the left neighbouring lenticule $160_2$ with lens axis A'. The distance between the centre of the lens and the centre of the subpixel determines the view numbering. For the pixel 165 shown, this is view 9. Pixel 165 is (M-N) (=3) times the subpixel pitch further from the lens axis than the subpixel nominated 6 is from the lens axis A'. The (M-N) jump will occur at the next lens boundary as well.

For a properly working 3D display every view number should occur at least once for every light line to avoid dark regions in the picture at certain viewing angles. This condition is met if (M-N)<=N. However, there is another condition to be met, which is that the number of times that a view number is rendered is the same for every view number. This condition is met if:

$$\frac{N}{M-N} = k \text{ and } k\epsilon\mathbb{N} \qquad \text{[Eq. 3]}$$

By substituting equation 2 into 3 this results in:

$$\frac{d_2}{d_1} = k \qquad \text{[Eq. 4]}$$

Thus, the spacing from the light line to the pixel plane is an integer multiple of the spacing from the pixel plane to the lenticular array.

In order to illustrate these conditions, the example of a 3D display that has M=9 and N=6 is chosen. M=9 views can be obtained by choosing $P_{lens}$=4.5*p and $n_{rows}$=2 (See Eq. 1). From Eq. 2, N=6 when $d_1$=2*$d_2$.

In Fig. 16a these parameters have been used, and it shows that the lens pitch of 4.5 subpixels results in the light from three consecutive subpixels hitting one and the same lens. Because of the slant of 1/6, the underlying row of the display contains the other set of 3 subpixels that hit that lens. In Fig. 16b it is shown how the blocks of 6 subpixels are located. This shows the position of the pixels under the lens, i.e. pixel position 1 is closest to the left lens boundary, and pixel position 6 is closest to the right lens boundary. The two side boundaries of the lens are shown as 164.

This aspect of the invention is based on the realisation that this is not the manner in which the views need to be rendered, and the views need to be rendered with the M-N view shift explained above with reference to Fig. 16c.

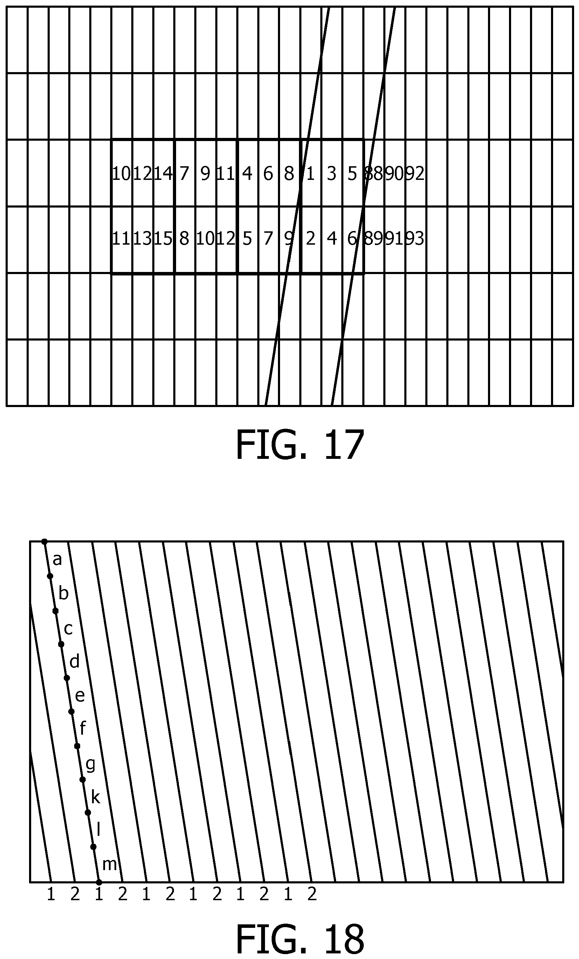

Fig. 17 is used to explain how the pixels are rendered. As already indicated, the subpixels in the blocks are numbered consecutively and the view number of the pixels of neighbouring blocks differ by 3 views. The result of this choice of the optical geometry is that every subpixel will occur twice for every light line.

In general, every pixel occurs k times, apart from the pixels that contribute to views that are at the largest viewing angles. In the case of pixels occurring twice, the number of views at the largest viewing angles not repeated will be (M-N) because the shift by (M-N) will mean that the first (M-N) views are not repeated. Thus, in Fig. 17, views 1, 2, 3 will not occur twice. The potential image distortion for these views is no problem since they occur at very large angles.

In the more general case of pixels occurring k times, k is defined by Eq. 3.

With reference to the embodiment of Fig. 9 above, the light lines and the pixels are not separated by a medium with an index n>1 in order to limit the angular spread, but by air. Absorbing walls are used to limit the angles at which the light arrives at a pixel. As a result, the definition of d2, as used in Eq.s 2-4 should be adapted by multiplying by n:

$$d_2^* = d_2 \times n \qquad \text{[Eq. 5]}$$

This can be stated differently in that the distance d2* should be equal to the effective optical path length *in the medium of the lens* between the light line and pixel, and this distance d2* is an integer multiple of the distance d1* which is equal to the effective optical path length *in the medium of the lens* between the pixel and lens. Distance d2* is marked on Fig. 9.

With reference to the embodiment of Fig. 10, a collimator is used to restrict the angles by which the light arrives at the display. In this case $d_2$ should be the optical distance between the end facet of the collimator and the pixel plane. This is marked on Fig. 10.

The use of light lines for the backlight also gives rise to other issues concerning the drive scheme. This aspect particularly relates to implementations in which different sets of light lines are turned on sequentially. The light lines are arranged in sets (at least two) of lines that are alternately switched on. The problem arises that the addressing of the display is typically from top to bottom, and the light lines essentially extend in that same direction. As a result, light generated along a light line will reach pixels that are addressed in the previous or next sub-frame, giving rise to cross-talk.

To address this problem, the light lines can be segmented and the driving scheme altered accordingly.

In the arrangement described above in which views are provided in a time sequential manner, the resolution of the display can for example be doubled by using two sets of light lines as explained with reference to Fig. 11.

For a row-addressed display, such as commercially available LCD displays, a cross talk problem arises. The display is addressed row by row, and after addressing the last row of the first frame, it will start addressing the first row of the next frame. Hence there is only one moment in time that the display is addressed with all the information of one frame. However, the duration of this time is too short to generate enough light from the light lines to have enough brightness from the display. At the same time, the last few rows of the display have been addressed, but the LC did not have sufficient time to switch to the desired state. As a result, the information displayed in the lower part of the display is not correct.

A solution to this problem is to scan the light lines in segments from top to bottom. For this, the light lines are segmented and driving the segments is carried out synchronously with driving of the display. The timing of switching the segment should be such that the light lines are switched on when the LC has switched to its desired state.

Another problem can arise with time sequential driving of the display that resembles the line crawling artefact that can be observed in interlaced displays. Driving methods of the light lines can also reduce the effect of line crawling.

In Fig. 18, a schematic drawing of the backlight used is shown. The backlight consists of light lines that are slanted in the same direction as the lenticular that is in front of the display (not shown). The light lines are divided into two sets that are indicated by 1 and 2 in the figure. The light lines are divided into parts (here denoted as a...m) that can be driven individually. All segments a1, meaning segment (a) from all of the light lines in set 1, are interconnected, just as a2, b1, b2 and so on.

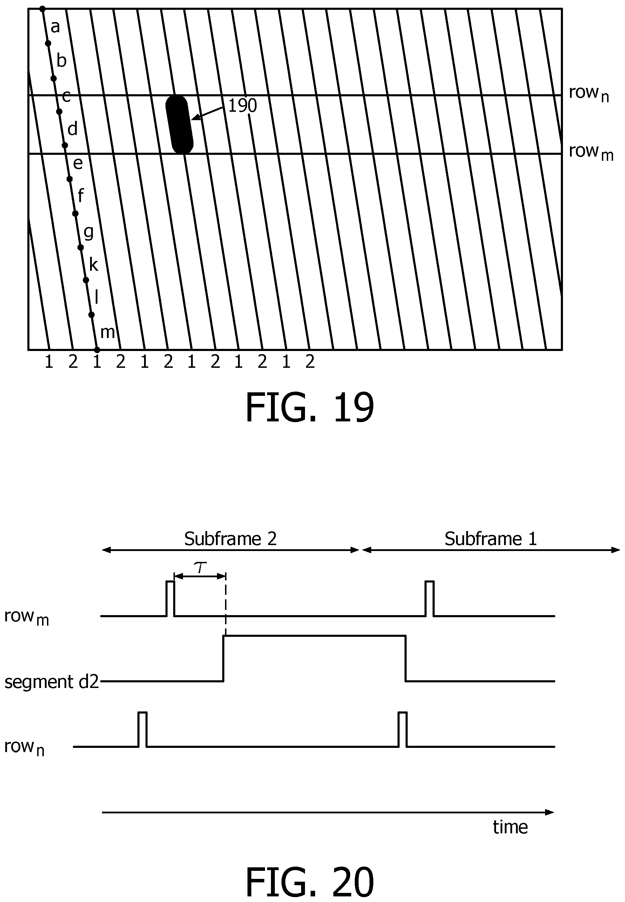

For illustration, Fig. 19 shows the backlight with only one of the segments 190 switched on. The segment is for the group 2 of light lines and segment d. Because the light is confined in its propagation direction by the optical plate between the light lines and the pixel plane, light will only illuminate part of the display. This is denoted by the white area 190. The lowest row ($row_m$) and the highest row ($row_n$) in the display that is illuminated by the light line is indicated.

It would seem logical to switch on the segment just after $row_m$ has been addressed. However, this does not take into account the switching time of the LC. If the light line is switched at that time, data from the previous subframe would still be on that pixel.

Since a different light line is switched on in that subframe, the image content is quite different, resulting in considerable cross-talk. Taking the switched time $\tau$ into account, the light line should be switched on time $\tau$ after addressing of the row.

As soon as the highest row $row_n$ is addressed, the light line segment d2 should be switched off.

In conclusion the following set of rules can be derived:

(i) The segment is switched on time $\tau$ (of the order of milliseconds) after the lowest row illuminated by the segment has been addressed with information of the present subframe;

(ii) The segment is switched off when the highest row illuminated by the segment is addressed with information of the next subframe;

(iii) For the lowest segment of the display there is no physical lowest row being illuminated by the segment. Here the segment should be addressed when one of the first rows of the next subframes is addressed. This row can be calculated as follows:

$$row_i = row_m - row_k - \left( \frac{\tau}{t_{subframe}} \times nrows \right)$$ [Eq. 6]

In this equation $t_{subframe}$ is the period of the subframe and nrows is the number of rows of the display.

For the highest segment of the display there is no physical highest row being illuminated by the segment. This segment should be switched off such that it is on for the same period of time as the other segments to avoid difference in brightness.

Fig. 20 shows a timing diagram for driving the light lines uses these constraints.

As shown, after the lowest row included with a segment is addressed, the segment is illuminated after the time delay. When the highest row in the segment is addressed next (which will be for the next subframe) the addressing of the light segment is ended.

This explanation is based on a display with only two sets of light lines.

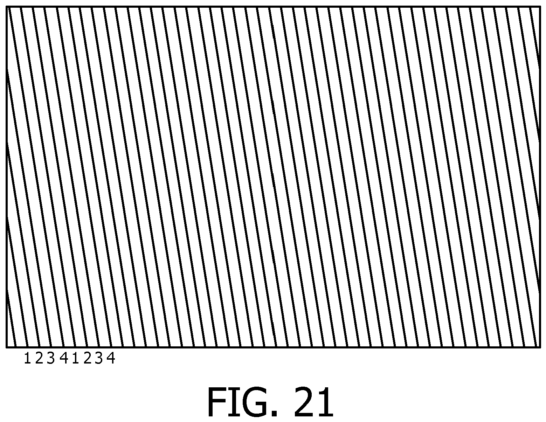

However, in other embodiments the backlight can be divided into more sets in order to increase the resolution. For example, there may be 4 sets of light lines in sequence. The backlight for such embodiment is depicted in Fig. 21. This shows the four sets of light lines, numbered as 1 to 4.

When such a display is addressed it seems logical to switch on the segments of the light lines of set 1, followed by set 2, set 3 and finally set 4. However, this can give rise to the problem that lines are perceived to crawl in the direction perpendicular to the light lines. This is because the light lines are addressed from left to right with four times the frame rate, which is relatively slow. The eyes will follow the light lines that light up from left to right and the lines will appear to move slowly over the screen.

The light lines (and therefore also the rendered images associated with the light lines) can be addressed in a different manner. For a 4 subframe sequence, the following possibilities arise:

Driving 1,3,2,4,1,3,2,4 ...
Driving 1,4,2,3,1,4,2,3 ...
Driving 1,2,4,3,1,2,4,3 ...

The general idea is to remove the regular pattern in addressing. By skipping rows in the addressing scheme, the distance between the light lines changes from subframe to subframe and line crawling hardly occurs any more.

In general:

(i) The distance between consecutively addressed light lines should be as long as possible
(ii) In one frame, every subframe should occur
(iii) For every subframe, the order should be the same to avoid flickering of certain lines.

There are various alternatives to the examples described. For example, the use of slanted lenticular and light sources has been mentioned. This is optional, and the lenticular may not be slanted. The line sources used in the backlight can be replaced with point sources, and the lenticular array in front of panel can then be replaced by an array of circular lenses.

The image data to be provided to the LC panel must take account of the lens and backlight design. The display can be provided with a look up table for this purpose. For example, data stored gives information defining which backlight light source combined with a certain pixel will illuminate a certain lens, and the direction of the resulting light path. This lookup table can be calculated or measured in a factory, and can be used for processing the image data.

The backlight can be formed using (polarized) OLED technology or LCD technology. This has the advantage that the light is already polarized and the technology is relatively cheap.

The use of lenticular lenses has been outlined. However, a redirection plate may instead be used. This plate has surface with varying height projections. The lenticular or redirection plate does not have to be over the LCD display screen- it can be placed between the backlight and the LCD-screen.

If the directional output and uniformity of the backlight light sources can be controlled sufficiently, no lenticular (or redirection plate) may be needed. The advantage is of course less components.

For a good 3D experience, a view typically has a width of 2 degrees. Without a lenticular or redirection plate, about 90 different directions would be needed from the backlight. This results in an expensive and bulky backlight. Furthermore, if all 90 views can be seen by users, the system needs to run at 90 x 50Hz which is not (yet) practical. However, for a single user in a known position (from headtracking) this option may already be practical.

The single cone output in the system of the invention has at least three views (i.e. 2 3D viewing possibilities). More preferably, there are at least six individual views, for example 6, 9 or 15 views.

In the embodiments above, the light source can be assumed to emit unpolarized light. The LC-panel requires polarized light and therefore has absorbing polarizers. In order to overcome the absorption loss, normal backlights often incorporate a reflective polarizer in order to pass through the correct polarization and recycle the other polarization. The effect is that the intensity/efficiency is increased.

The use of such a reflective polarizer near the LC-panel could damage the desired collimated directional output from the light source in the arrangement of the invention. Therefore, it is preferred not to incorporate such a reflective polarizer and either to accept the absorption loss or to take alternative measures to reduce the loss.

It is possible to create polarized light sources. The advantage is that most of the light will not be absorbed by the polarizer in the LC panel. In order to make such a light source with a collimated line output, a polarization sensitive collimator can be used as part of the light source. The path of light from the light source of one polarization is substantially unaltered while a polarization perpendicular to said polarization is substantially reflected towards the light source.

Such a collimator can be made from birefringent materials (having a refractive index which depends on the polarization) in conjunction with a standard material. The net effect is that one polarization does not see the collimator. The light of this polarization appears to be emitted from a line. The other polarization sees the collimator and undergoes a reflection from the reflective polarizer. If the collimator is etendue conserving, such as a CPC, then the returning light will be reflected into the source.

The polarization of the light may then be changed within the light source and the light has a second chance of being emitted.

The drive schemes described above assume row-addressed displays that are written from top to bottom. However, the driving scheme of the panel can be different, for instance from bottom to top. The driving of the segments should then also be implemented in the reverse way.

There are displays designed to be used in the portrait mode. In this case the display can be column addressed. In that case the segments on one and the same column should be switched on at the same time and the segments have to be scanned from left to right or right to left.

The discrete light sources of the backlight have been shown as lines. These lines may be continuous (i.e. from top to bottom of the display) or segmented (forming a dotted or dashed line) and they may be staggered. Thus, each light source is a single line-shaped light emitting element or else a series of two or more light emitting elements arranged substantially in a line. The individual light emitting elements can be elongate and arranged in the line direction (i.e. creating a dotted or dashed line) or they may be offset from the line direction (i.e. creating a staggered line).

In all case, each light source line (whether a single light emitting element or multiple light emitting elements) is a narrow and elongate light source,

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. A multi-view display device for providing multiple views within a field of view of the display comprising:

   - a display panel (24) comprising pixels;
   - a backlight comprising an arrangement of narrow and elongate light sources (60), wherein each light source, when turned on, illuminates an associated region of the pixels;
   - an array of lenses (28) arranged in front of the display panel (24), wherein the light of each illuminated pixel reaches exactly one lens;
   - a display device controller adapted to control the display panel (24) and the arrangement of light sources (60) such that a partial display output is provided comprising simultaneously a set of at least three 2D views with no repetition of individual 2D views; and

   a headtracking system (67), wherein during operation of the device, all pixels are illuminated with a predetermined spread of light around one common direction such that during one illumination operation the set of at least three 2D views is generated in a partial field of view of the display device, and wherein said partial field of view of the display device is selected based on the input received from the headtracking system (67).

2. A device as claimed in claim 1, wherein the array of lenses (28) image the pixel plane of the display panel to substantially infinity.

3. A device as claimed in any preceding claim, wherein the backlight further comprises a lens (62) associated with each light source (60) for providing a collimated directional output.

4. A device as claimed in any preceding claim, wherein the display panel (24) comprises an array of LC display pixels and wherein the light sources (60) comprise LED strips.

5. A method of operating a multi-view display device for providing multiple views within a field of view of the display which display device comprises pixels and a backlight comprising an arrangement of narrow and elongate light sources (60), wherein each light source, when turned on, illuminates an associated region of the pixels and an array of lenses (28) arranged in front of the display panel (24)
   wherein the method comprises:

   selecting a partial field of view of the display device based on an input received from a headtracking system (67);
   controlling the display panel (24) and the arrangement of light sources (60) such that a partial display output is provided in the partial field of view, comprising simultaneously a set of at least three 2D views with no repetition of individual 2D views and in which the light of each illuminated pixel reaches exactly one lens, wherein all pixels are illuminated with a predetermined spread of light around one common direction to generate the at least three 2D views in the partial field of view of the display device.

**Patentansprüche**

1. Anzeigevorrichtung mit mehreren Ansichten zum Bereitstellen von mehreren Ansichten innerhalb eines Bildfeldes der Anzeige, umfassend:

   - eine Anzeigetafel (24), die Pixel umfasst;
   - eine Hinterleuchtung, die eine Anordnung von schmalen und länglichen Lichtquellen (60) umfasst, wobei jede Lichtquelle, wenn sie eingeschaltet ist, eine zugeordnete Region der Pixel beleuchtet;
   - ein Linsenarray (28), das vor der Anzeigetafel (24) angeordnet ist, wobei das Licht jedes beleuchteten Pixels exakt eine Linse erreicht;
   - eine Anzeigevorrichtungssteuerung, die dazu ausgebildet ist, die Anzeigetafel (24) und die Lichtquellenanordnung (60) zu steuern, sodass eine Teilanzeigeausgabe bereitgestellt wird, die gleichzeitig einen Satz von mindestens drei 2D-Ansichten ohne Wiederholung einzelner 2D-Ansichten umfasst; und

   ein Headtracking-System (67),
   wobei während Betrieb der Vorrichtung alle Pixel mit einer vorbestimmten Lichtausbreitung um eine gemeinsame Richtung herum beleuchtet werden, sodass während eines Beleuchtungsbetriebs der Satz von mindestens drei 2D-Ansichten in einem Teilbildfeld der Anzeigevorrichtung erzeugt wird, und wobei das Teilbildfeld der Anzeigevorrichtung basierend auf der Eingabe ausgewählt wird, die aus dem Headtracking-System (67) empfangen wird.

**2.** Vorrichtung nach Anspruch 1, wobei das Linsenarray (28) die Pixelebene der Anzeigetafel im Wesentlichen bis ins Unendliche abbilden.

**3.** Vorrichtung nach einem vorstehenden Anspruch, wobei die Hinterleuchtung weiter eine Linse (62) umfasst, die jeder Lichtquelle (60) zugeordnet ist, zum Bereitstellen einer kollimierten gerichteten Ausgabe.

**4.** Vorrichtung nach einem der vorstehenden Ansprüche, wobei die Anzeigetafel (24) ein Array von LC-Displaypixeln umfasst, und wobei die Lichtquellen (60) LED-Streifen umfassen.

**5.** Verfahren zum Betreiben einer Anzeigevorrichtung mit mehreren Ansichten zum Bereitstellen von mehreren Ansichten innerhalb eines Bildfeldes der Anzeige, welche Anzeigevorrichtung Pixel und eine Hinterleuchtung umfasst, die eine Anordnung von schmalen und länglichen Lichtquellen (60) umfasst, wobei jede Lichtquelle, wenn sie eingeschaltet ist, eine zugeordnete Region der Pixel und ein Linsenarray (28) beleuchtet, das vor der Anzeigetafel (24) angeordnet ist,
wobei das Verfahren umfasst:

Auswählen eines Teilbildfeldes der Anzeigevorrichtung basierend auf einer Eingabe, die aus einem Headtracking-System (67) empfangen wird;
Steuern der Anzeigetafel (24) und der Lichtquellenanordnung (60), sodass eine Teilanzeigeausgabe im Teilbildfeld bereitgestellt wird, die gleichzeitig einen Satz von mindestens drei 2D-Ansichten ohne Wiederholung einzelner 2D-Ansichten umfasst, und in dem das Licht jedes beleuchteten Pixels exakt eine Linse erreicht, wobei alle Pixel mit einer vorbestimmten Lichtausbreitung um eine gemeinsame Richtung herum beleuchtet werden, um die mindestens drei 2D-Ansichten im Teilbildfeld der Anzeigevorrichtung zu erzeugen.

## Revendications

**1.** Dispositif d'affichage multivue pour fournir de multiples vues à l'intérieur d'un champ de vue de l'affichage comprenant :

- un écran d'affichage (24) comprenant des pixels ;
- un rétroéclairage comprenant un agencement de sources de lumière étroites et allongées (60), dans lequel chaque source de lumière, lorsqu'elle est allumée, éclaire une région associée des pixels ;
- un réseau de lentilles (28) agencé à l'avant de l'écran d'affichage (24), dans lequel la lumière de chaque pixel éclairé atteint exactement une lentille ;
- un dispositif de commande de dispositif d'affichage adapté pour commander l'écran d'affichage (24) et l'agencement de sources de lumière (60) de manière à ce qu'une sortie d'affichage partielle soit fournie comprenant simultanément un ensemble d'au moins trois vues en 2D sans répétition de vues individuelles en 2D ; et

un système de suivi de tête (67),
dans lequel durant l'opération du dispositif, tous les pixels sont éclairés par une propagation prédéterminée de la lumière autour d'une direction commune de telle sorte que durant une opération d'éclairage l'ensemble d'au moins trois vues en 2D est généré dans un champ de vue partiel du dispositif d'affichage, et dans lequel ledit champ de vue partiel du dispositif d'affichage est choisi sur la base de l'entrée reçue à partir du système de suivi de tête (67).

**2.** Dispositif selon la revendication 1, dans lequel le réseau de lentilles (28) image le plan de pixels de l'écran d'affichage sensiblement à l'infini.

**3.** Dispositif selon une quelconque revendication précédente, dans lequel le rétroéclairage comprend en outre une lentille (62) associée à chaque source de lumière (60) pour fournir une sortie directionnelle collimatée.

**4.** Dispositif selon une quelconque revendication précédente, dans lequel l'écran d'affichage (24) comprend un réseau de pixels d'affichage à cristaux liquides et dans lequel les sources de lumière (60) comprennent des bandes de DEL.

**5.** Procédé d'opération d'un dispositif d'affichage multivue pour fournir de multiples vues à l'intérieur d'un champ de vue de l'affichage, lequel dispositif d'affichage comprend des pixels et un rétroéclairage comprenant un agencement de sources de lumière étroites et allongées (60), dans lequel chaque source de lumière, lorsqu'elle est allumée, éclaire une région associée des pixels et un réseau de lentilles (28) agencé à l'avant de l'écran d'affichage (24) dans lequel le procédé comprend :

la sélection d'un champ de vue partiel du dispositif d'affichage sur la base d'une entrée reçue à partir d'un système de suivi de tête (67) ;

la commande de l'écran d'affichage (24) et l'agencement de sources de lumière (60) de manière à ce qu'une sortie d'affichage partielle soit fournie dans le champ de vue partiel, comprenant simultanément un ensemble d'au moins trois vues en 2D sans répétition de vues individuelles en 2D et dans lequel la lumière de chaque pixel éclairé atteint exactement une lentille, dans lequel tous les pixels sont éclairés par une propagation prédéterminée de la lumière autour d'une direction commune pour générer les au moins trois vues en 2D dans le champ de vue partiel du dispositif d'affichage.

FIG. 1

FIG. 2

FIG. 3

FIG. 4

FIG. 5

FIG. 6

FIG. 7

FIG. 8

27

28

24

90          90

t2          t3

80        82        80        82

# FIG. 9

102

d2

104

# FIG. 10

27

24

110

112 114 112 114

## FIG. 11

lenticular

24

Θc

substrate

124

122

120 120

## FIG. 12

FIG. 13

FIG. 14

atan (1/6)

| 1 | 3 | 5 | 7 | 9 | | | | |
| | 2 | 4 | 6 | 8 | 1 | 3 | 5 | 7 | 9 |
| | | | | | | 2 | 4 | 6 | 8 |
| | | | | | | | | | |

# FIG. 15

FIG. 16

FIG. 17

FIG. 18

## FIG. 19

## FIG. 20

1 2 3 4 1 2 3 4

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0570179 A2
- WO 2007072330 A
- WO 1998021620 A
- WO 2008126049 A
- WO 2004070451 A
- WO 2004070467 A
- WO 2005006774 A
- WO 2003034748 A
- WO 2003071335 A